# EUROPEAN PATENT APPLICATION

(11) **EP 2 629 101 A1**
(43) Date of publication of application: **21.08.2013**
(21) Application number: 12000928.7
(22) Date of filing: 14.02.2012
(51) Int. Cl.: G01P 5/00, G01P 5/24, G01P 5/26, B63B 22/00, G01S 17/58

(54) **Floating wind measuring system**

(71) Applicant: SSB Wind Systems GmbH & Co. KG, 48499 Salzbergen (DE)
(72) Inventor: Bertolotti, Fabio, 48455 Bad Bentheim (DE)

(57) **Abstract**

The invention concerns a floating wind-measuring system comprising a buoy (10) having a first remote-sensing unit (100) emitting a first beam of waves (150) along a first beam direction into the atmosphere and measuring the air velocity along said first beam direction at a first sensing location (153) characterized in:
- a second remote-sensing unit (200) emitting a second beam of waves (250) along a second beam direction into the atmosphere and measuring the air velocity along said second beam direction at a second sensing location (253),
- a first side arm (110) attached to the buoy (10) and fixedly holding the first remote sensing unit (100) relative to the buoy (10),
- a second side arm (210) attached to the buoy (10) and fixedly holding the second remote sensing unit (200) relative to the buoy (10), the first and second arms (110, 210) providing a predetermined separation distance between the first remote-sensing unit (100) and the second remote-sensing unit (200),

wherein the first beam of waves (150) and the second beam of waves (250) are oriented to produce a cross-over point (402), the first and second sensing locations (153, 253) being located substantially in the vicinity of the cross-over point (402) and the predetermined separation distance being chosen to provide sufficient vectorial independence between the first beam direction (160) and the second beam direction (260) to allow the calculation of two components of the air velocity vector essentially at the cross-over point (402).

The invention concerns also a method for correcting remote-sensing data obtained using the floating wind-measuring system, characterized in:
- Computing the wind field velocity from the remote-sensing data at the cross over point,
- Measuring the wind velocity using the local wind measuring instrument, - comparing the measured and computed wind field velocities, and
- Modifying the computation of the remote-sensing data to bring the computed and measured values in agreement.

## Description

The invention concerns a floating wind-measuring system comprising a buoy having a first remote-sensing unit emitting a first beam of waves along a first beam direction into the atmosphere and measuring the air velocity along said first beam direction at a first sensing location. The invention concerns further a method for correcting remote-sensing data obtained using the floating wind-measuring system.

The rising demand for off-shore wind energy has generated a need to identify favorable locations at sea for the placement of wind farms. Water depth and wind resource at a proposed site are the key component of the assessment of overall investment profitability, and the wind resource needs to be assessed with high accuracy to limit the uncertainty in energy production, and, thus, revenue.

Due to its key importance, banks and other lending institutions require the wind resource assessment to be made with proven, reliable, measurement instruments. Meteorological masts carrying calibrated anemometers and wind vanes provide the accuracy and precision requested by the lending institutions, while remote sensing units, based on either light detection and ranging, known as Lidar, or sound detection and ranging, known as Sodar, are not considered sufficiently reliable and accurate do replace the anemometer and wind vane.

The lack of sufficient accuracy of remote sensing units is mainly due to the method of operation. These units emit, simultaneously or sequentially, multiple beams of waves (electromagnetic or acoustic) upwards into the atmosphere and directly measure the air velocity along the direction of beam propagation using the Doppler shift in the reflected signal.

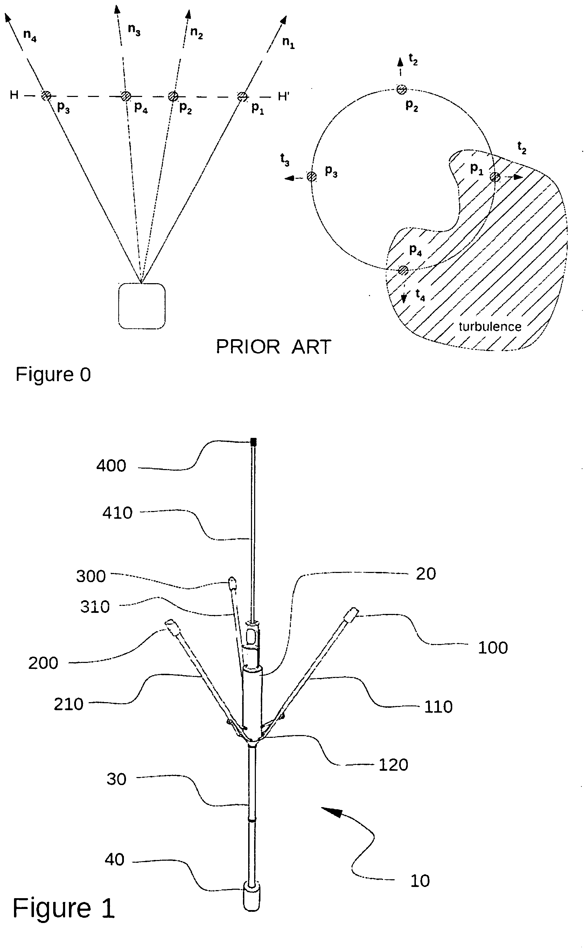

An example unit of prior art is shown in Figure 0, wherein the beam direction of each of the four emitted beams is labeled n₁. n₂, n₃ and n₄. The multiple beams are divergent to one another in order to provide vectorially independent measurements, and the signal difference between one or more beams is used to compute horizontal wind velocity and direction. In reference to the same figure, the beam directions projected onto the horizontal plane are labeled t₁, t₂, t₃, t₄. These projected directions indicate the component of velocity in the plane measured by each beam. To calculate three components of air velocity using vector addition and subtraction, the prior-art computation assumes a single wind velocity and speed over the entire horizontal plane above the unit - and assumption we refer to as "spatial homogeneity" herein.

Additionally, when measurements of the Doppler signal along each beam is made sequentially, hence at different instances in time, then the velocity calculation additionally assumes that the air velocity is steady in time - an assumption we refer herein as "temporal homogeneity". The real wind field, however, contains turbulent eddies that make the wind-field different, both in time and space, at each of the measuring locations, even when at the same height. This variation invalidates the spatial and temporal homogeneity assumption used in the air-field calculation, hence resulting in errors in the wind speed and direction reported by the remote sensing unit.

Accordingly, wind-resource assessment at off-shore sites is today conducted with meteorological masts mounted upon a pylon or jacket fixed to the ocean floor, with the masts equipped with calibrated wind anemometers and wind vanes. Unfortunately, this installation has three great disadvantages: first, the cost is very high, due to the foundation and pylon work, second, the installation cannot be moved to a new site once the assessment at on location is finished, and, lastly, the pylon or jacket support is limited to relatively shallow waters, typically less than 40 meters in depth.

Solutions have been proposed in the prior art for a wind-measuring system at off-shore locations that is free from these three disadvantages. All solutions involve a buoy on which either a remote sensing unit is mounted alone, or in combination with a standard met-mast.

WO 2005/008 284 A1 shows a buoy including a Lidar unit. Since the motion of the buoy moves the laser beam relative to the wind, thereby introducing an error in the inferred wind speed, a motion and velocity detection means for measuring the motion of the buoy in the water is incorporated, together with compensating means for removing the effects of buoy motion from the Lidar signal.

WO 2009/063 112 A1 shows a buoy including a meteorological mast, and possibly a Lidar unit.

WO 2011/095 666 A2 shows a buoy with a meteorological mast, wherein the wind sensors are ultrasonic anemometers, much in parallel to the ultrasonic anemometers used on land-based met-masts. Due to the full-height of the mast system (say, 100 meters), the overall system has prohibitive costs, and amplifies wave-induced motion at its base to large motions at its top that render the accurate wind measurement very difficult.

These proposed wind-measuring systems using a remote sensing unit or a full-height met-mast do not address the main need of wind-site developers, namely the generation of accurate and dependable wind-resource data acceptable by the lending community. This type of data is usually called "bankable data" in the wind-energy business. What is needed is a system for measuring the wind and generating bankable data that, additionally, is low-cost, is transportable from site to site, and is deployable in deep waters.

It is first objective of the invention to provide a wind-measuring system capable of providing "bankable data" without the use of a full-height meteorological mast. It is a second objective of the invention to provide a wind measuring system that can be used an off-shore locations and can be easily moved from one location to another, essentially independently of the water depth. It is a further objective to provide a wind-measuring system that is fault tolerant, thereby providing continued operation under partial loss of its wind-measuring instruments.

The objects of the invention are achieved by a floating wind-measuring system attached on a buoy according to the main claim (claim 1). Preferred embodiments are subject of the referred subclaims of the main claim. A method for correcting remote-sensing data obtained using the floating wind-measuring system is subject of claim 11.

The wind measuring system of the invention comprises multiple remote sensing units, preferably of the Lidar type, positioned at predetermined emission-locations relative to each other, each unit emitting at least one beam of electromagnetic or acoustic waves, and each unit oriented to cause the at least one beam to cross, at a predetermined main cross-over point, the at least one beam from each of the other multiple sensing units, with the emission-locations being chosen to produce vectorial independence between the at-least-one beam directions.

In the preferred embodiment, at least three remote sensing units are used. The crossing of Lidar measuring volumes, together with vectorial independence of each beam, allows the wind measuring system to compute accurately and essentially instantaneously all three components of the wind velocity at the main cross-over point. Additionally, a conventional and calibrated wind anemometer can be placed near the main cross-over point, allowing a continuous and constant comparison between the Lidar measurements and those of the calibrated anemometer.

The method for correcting remote-sensing data obtained using the floating wind-measuring system is characterized in:
- computing the wind field velocity from the remote-sensing data at the cross over point,
- measuring the wind velocity using the local wind measuring instrument,
- comparing the measured and computed wind field velocities, and
- modifying the computation of the remote-sensing data to bring the computed and measured values in agreement.

This comparison allows a verification of the correct functioning of all remote sensing units. Robustness and accuracy is also gained at altitudes above the main cross-over point due to the presence of secondary cross-over points at which two beams cross.

Further features, properties and advantages of the invention will become clear from the following description of embodiments in conjunction with the accompanying the drawing.
Figure 0 shows a schematical illustration of a floating wind-measuring system attached on a buoy according to the state of the art.
Figure 1 shows a first embodiment of our inventive floating wind-measuring system on a buoy.
Figure 2 shows the transport and erecting the buoy according to figure 1.
Figure 3 shows a detail of the buoy according to figure 1.
Figure 4 shows a second embodiment of our inventive floating wind-measuring system attached on a buoy.
Figure 5 shows a schematical illustration of a floating wind-measurement according to Figure 4.
Figure 6 shows a third embodiment of the invention.
Figure 7 shows a schematical illustration of a floating wind-measurement system attached on a buoy according to the section line A-A' of figure 6.
Figure 8 shows a schematical illustration of a floating wind-measurement system attached on a buoy according to the section line B-B' of figure 6.

In reference to figure 1, the wind measuring system comprises a buoy 10 attached to the sea bed with one or more mooring lines (not shown), using mooring technology well known in the art.

The buoy 10 comprises an upper flotation tank 20 connected to a lower flotation tank 40 via a pipe-stem 30. The line connecting the mass centers of the upper and lower flotation tanks defines the axis of the buoy 10. Above and mechanically attached to, the upper flotation tank 20 is a short mast 410 supporting a local wind measuring instrument 400, such as a wind anemometer and a wind vane. Preferably, the short mast 410 is retractable inside the upper flotation tank 20. During normal operation of the wind-measuring system, the buoy 10 is oriented in essentially a vertical direction, with the water line positioned towards the upper end of the upper flotation tank 20.

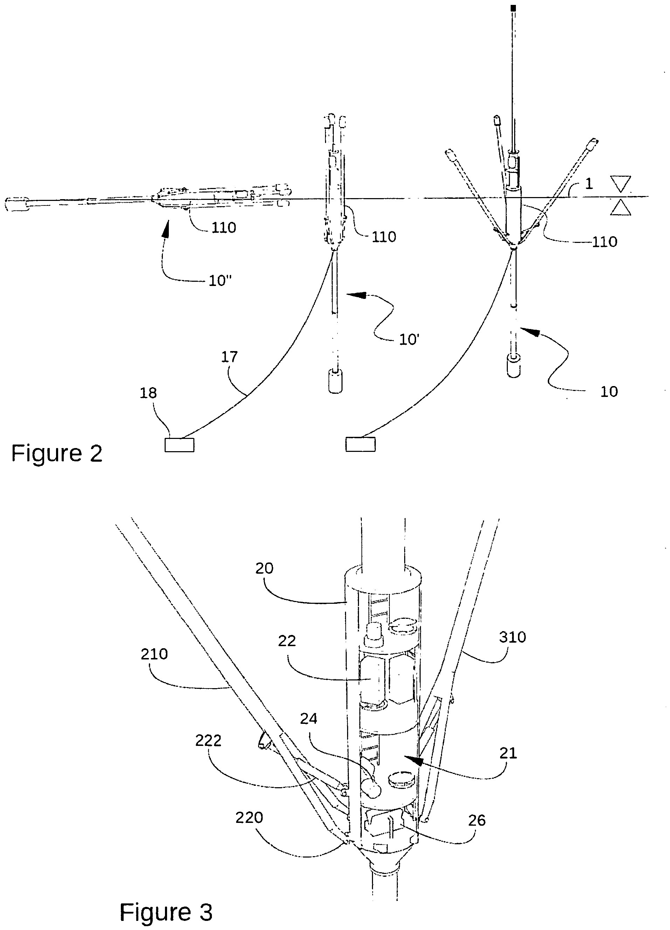

A first side arm, denoted 110 in figure 1, a second side arm 210 and a third side arm 310 are pivotally attached via a pivot 120, respectively 220 in Figure 2, the upper flotation tank 20. At the end of first side arm 110 a first remote sensing unit 100 is located. Additionally at the end of second side arm 210, a second remote sensing unit 200 is located. In the preferred embodiment a third remote sensing unit 300 is located at the end of the third side arm 310. In the buoy 10 fully open position, as denoted in figure 1, the first, second and third side arms extend outwards from the upper flotation tank 20 to position the first, second and third remote sensing units 110, 210, 310, respectively, at a predetermined separation distance between any two remote sensing units, and preferably positioning the first, second, and third remote sensing units at essentially the vertices of an equilateral triangle.

In reference to figure 2, to transport the buoy 10 to a desired location at sea, the first, second, and third side arms 110, 210, 310 (see figure1) are retracted to a position essentially parallel to the axis of the buoy, the short mast 410 (see figure 1) is retracted inside the upper flotation tank 20 (see figure 1), and the lower flotation tank 40 (see figure 1) is flushed of water and made buoyant. The resulting "closed" configuration, shown at 10" in figure 2, rests essentially horizontally on the water surface 1, and allows easy towing to the desired destination.

At destination, the operation is essentially reversed. After the mooring line 17 and bottom mass 18 have been positioned, the lower flotation tank 40 (see figure 1) is flooded to bring the buoy in an up-right position, as shown at 10' in figure 2. Ballast within, or structurally connected to, the lower flotation tank 40 (see figure 1) provides additional stability to the buoy. The buoy is then brought into its operational configuration by pivoting, or extending, the first side arm 110, second side arm 210, and third side arm 310 outwards to their fully open position, and extending the short mast 410 (see figure 1) upwards, from its stowed position inside the upper flotation tank 20 (see figure 1). The low volume of each of the side arms, together with the elongated shape of the upper flotation tank 20 minimizes the forces effective on the buoy by the passage of waves. This minimized sensitivity to wave passage simplifies the correction of the measured wind data to account for buoy motion.

In reference to figure 3, the upper flotation tank 20 is partitioned into water-tight compartments, such as the one shown at 21 in figure 3. These compartments 21 are accessible by personnel though access ports and stairs. Within one compartment, an air compressor unit, shown at 26 in figure 3, is in pipe communication with the outside air and with the lower flotation tank 40 (see figure 1). The compressor unit 26 is used to send compressed air into the lower flotation unit 40 to purge water therefrom.

In another embodiment of the invention, the compressor unit 26 is located on the tender vessel servicing the buoy, and the air is guided from the compressor to the lower flotation unit 40 (see figure1) using detachable pipes between the vessel and the buoy.

Also located within the upper flotation tank 20 is an uninterruptible power supply 24 and cabinetry holding electronic components 22 for collecting and storing measured data, for measuring the pitch, yaw, roll, and bobbing motions of the buoy, and for communication with a station or operator on the main land or on a ship.

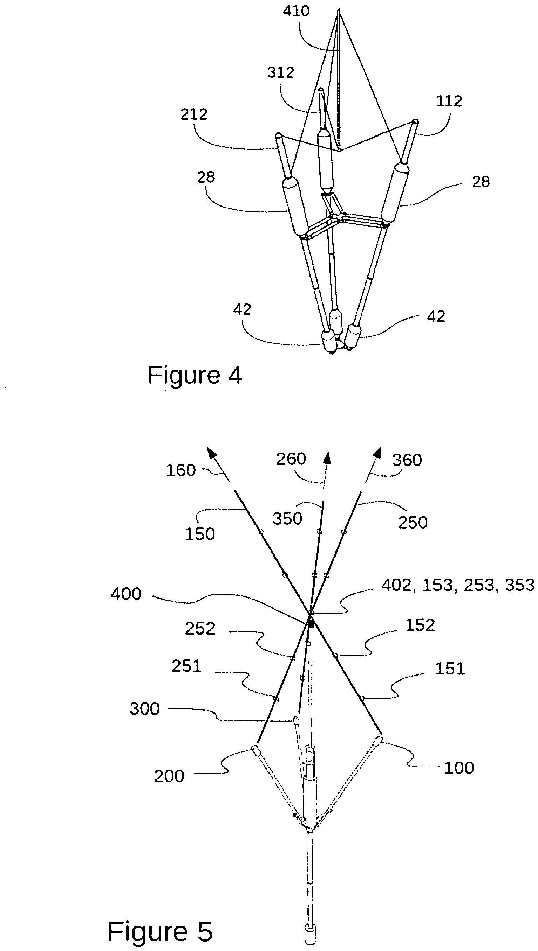

In reference to figure 4, in a second embodiment of the invention, local upper flotation tanks 28 and local lower flotation tanks 42 are incorporated into the main arms 112, 212 and 312. The short mast 410 is suspended at the center of the overall structure using wires connected to each of the main arms.

In the following description, the word "remote sensing unit", denotes a remote sensing unit of Lidar type, of Sodar type, or the like, and the word "beam" will denote an electromagnetic or acoustic beam, as appropriate. For compactness, we use the abbreviation "beam" to mean "beam of waves".

In reference to figure 5, the first remote sensing unit 100 emits at least one first beam of waves 150 directed generally upwards at a predetermined angle to the horizontal to pass near the local wind measuring instrument 400. The first beam of waves 150 continues upwards to additional heights of interest, such as the heights reached by the rotating blades of a wind turbine. Similarly, the second remote sensing unit 200 emits at least one second beam of waves 250, and third remote sensing unit 300 emits at least one third beam of waves 350, respectively, with each beam of waves passing close to the local wind measuring instrument 400, and continuing to the aforementioned heights of interest.

The first beam's 150 "line-of-sight" direction, is the direction along the length of the first beam 150, and is indicated by arrow 160 in the figure. The "line-of-sight" direction of second beam 250 and third beam 350 are similarly indicated at 260 and 360, respectively.

In general, a remote sensing unit can measure the Doppler shift along the line-of-sight direction of the unit's emitted beams at predetermined sensing locations along the beam. A first sensing location 153 is found on first beam 150, a second sensing location 253 is found on second beam 250, and a third sensing location 353 is found on third beam 350. Additional sensing locations are labeled 151, and 152 on first beam 150, in in the figure, 251, and 252 for second beam 250 and a similar numbering for third beam 350 (not shown).

A "cross-over" point is a point in space that gets illuminated, or visited, by two or more beams, either simultaneously or sequentially in time. We distinguish between two types of cross-over points, namely "main" and "secondary", where:
(1) A main cross-over point is a location in space that gets illuminated by at least three beams;
(1a) A main synchronous cross-over point is a main cross-over point further characterized that the point gets illuminated at the same time, such as when the at least three beams cross each other;
(2) A secondary cross-over point is a location in space that gets illuminated by two beams;
(2a) a secondary synchronous cross-over point is a secondary cross-over point further characterized that the point gets illuminated by the two beams at the same time, such as when the two beams cross each other;

Lastly we use the label "regular measuring location" to denote a point in space visited by only one beam. The three beams 150, 250 and 350 are oriented to produce a main cross-over point 402 positioned near the local wind measuring instrument 400. In the preferred embodiment, the main cross-over point 402 is a main synchronous cross-over point. One particular group of sensing locations, labeled at 153, 253, and 353 in figure 5, is located in the immediate vicinity of the main cross-over point 402.

The predetermined separation distance is chosen to provide vectorial independence between
■ The line-of-sight direction 160 of the first beam and the line-of-sight direction 260 of the second beam,
■ The line-of-sight direction 160 of the first beam and the line-of-sight direction 360 of the third beam, and
■ The line-of-sight direction 260 of the second beam and the line-of-sight direction 360 of the third beam.

A representative value for the predetermined separation distance is 15 meters, together with an elevation of the main cross-over point of 25 meters.

Due to the vectorial independence of the line-of-sight directions 160, 260, and 360, the union of these three directions forms a vectorial basis set, also known as a coordinate system, in which the wind velocity (vector) at the main cross-over point can be determined and expressed in full form (i.e. all three components of the wind velocity), without invoking the detrimental spatial homogeneity assumptions of the prior art, and in the preferred embodiment wherein the main cross-over point is of synchronous type, without invoking the temporal homogeneity assumptions of the prior art. Comparing the wind speed measured by the local measuring instrument 400 - itself a unit producing "bankable data" - to the computed wind speed and direction from the remote sensing units provides a check of the accuracy of the remotely sensed wind data at each instance in time, and renders the remotely sensed data at sensing locations 153, 253 and 353 "bankable". Once the remote-sensing accuracy and bankability is established at one point, extension to other points follows directly. In particular, one can apply an adjustment factor to each remote-sensing unit individually to bring the remote-sensing wind velocity measured at main cross-over point 402 in agreement with the data from the local measuring instrument 400. The magnitude of each correction factor offers a valuable indication of the health and measurement drift of the associated remote-sensing unit. When the correction factor exceeds a predetermine magnitude, a warning is sent to the buoy end-user to perform maintenance on the remote-sensing unit. The ability to continuously check and correct the remote-sensing unit's predicted wind velocity at the main cross-over point 402 using the wind velocity measured by the local measuring instrument 400 - accepted by the banking and lending community - renders the entire set (i.e. at all sampling volumes) of remote-sensing measurements also of \bankable" quality.

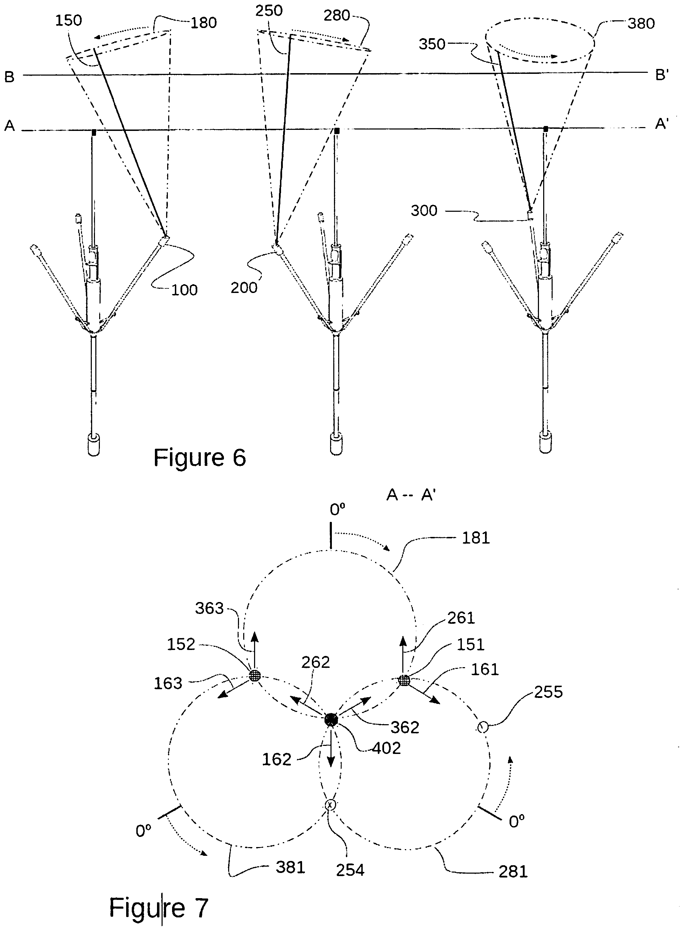

In reference to Figure 6, it is known in the art, that a single remote-sensing may employ a plurality of spatially fixed beams produced by static optical ports. While such a construction is directly usable in this invention, the preferred embodiment uses the type of remote-sensing comprising a beam rotational means for rotating a single beam about a remote-sensing axis to sweep-out a conical shape in the air stream. Thus a first rotational means inside first remote-sensing unit 100 rotates the first beam 150 to sweeps-out a first cone shape 180, while a second and third rotational means inside second and third remote-sensing units, respectively, rotate the second beam 250 and third beam 350 to sweeps-out a second cone shape 280 and a third cone shape 380, respectively. In figure 6, a first horizontal plane is denoted by line A-A'. This plane contains the main cross-over point 402 (see figure 5). A second horizontal plane is denoted by B-B', and passes at a higher altitude above the main cross-over point.

In reference to figure 7, the rotational direction of the first beam rotational means inside first remote-sensing unit 100 (figure 6) is chosen as clockwise, when looking from high above the remote-sensing unit towards the remote-sensing unit itself, while the sweeping direction for the second and third beam rotational means inside second remote-sensing unit 200 (see figure 6) and third remote-sensing unit 300 (see figure 6), respectively, is set to counter-clockwise. The advantage of this choice of rotational directions can be seen in figure 7, wherein the cross-sections 181, 281, and 381 produced by the intersection of sweep-out cones 180, 280 and 380, respectively, with plane A-A' are depicted. The direction of rotation for beam 150 along cross-section 181 is clockwise when viewed by an observer above plane A-A' looking towards the remote-sensing units. The direction of beams 150 and 250, along their associated cross-sections 181 and 281 is counter-clockwise.

The rotational motion of the first, second and third rotational means is synchronized, making the three beams rotate with the same velocity. Thus, each beam sweeps-out its cone in the same time duration, and all three beams pass through the reference point labeled 0° on their respective cross-sections (in figure 7) at essentially the same instant in time. The beam synchronization ensures that the main cross-over point 402 is a main synchronous cross-over point.

Point 151 is a secondary cross-over point between cross-sections 181 and 281 that is at equal angular distance from the reference points 0° on cross-sections 181 and 281. In the preferred embodiment, it follows from beam synchronization that both beam 150 (see figure 6) and beam 250 (see figure 6) will arrive at point 151 at the same instant in time, making point 151 a secondary synchronous cross-over point. The line-of-sight projections 161 and 261 are the projection of the beam's line-of-sight directions 160 and 260 onto the horizontal plane A-A', respectively. The line-of-sight projections 161 and 261 indicate the direction of the horizontal velocity measurement given by the Doppler signal in beams 150 (see figure 6) and 250 (see figure 6) at point 151. Since the line-of-sight projections 161 and 261 are vectorially independent, two orthogonal components of air velocity in the horizontal plane can be instantaneously computed, thereby avoiding the detrimental effects of unsteady turbulence and increasing the accuracy of the remote sensing system.

In the preferred embodiment, the main cross-over point 402 is a main synchronous cross-over point, hence the Doppler shift along the three vectorially independent line-of-sight directions 160, 260, and 360, allows the instantaneous calculation of all three components of velocity at this point. The independent line-of-sight projections are denoted in figure 7 as 162, 262, and 362.

Lastly, point 152 is a secondary synchronous cross-over point at an intersection of cross-sections 181 and 381. Here as well, the vectorial independence of the line-of-sight projections 163 and 363 allows the simultaneous determination of the horizontal components of the air velocity at point 152.

The secondary cross-over point 254 is at an intersection of cross-sections 281 and 381. Beam 250 passes secondary cross-over point 254 at a later time than beam 350. Although the line-of-sight directions of beam 250 and beam 350 are vectorially independent at point 254, the time delay between the illumination of point 254 by beam 350 and the illumination by beam 250 induces the use of the "temporal homogeneity" assumption. Nevertheless, the ability to measure air velocity along two independent directions at the same spatial location provides a better measurement of air-velocity than prior-art systems by virtue of eliminating the spatial-homogeneity assumption.

Lastly, numerous regular measuring locations, such as 255 in figure 7, can be located along each cross-section, and the associated Doppler measurement along the beam's direction can be added to the measured data from the cross-over points to form a more complete data set, from which a more complete and accurate reconstruction of the velocity field over the plane A-A' can be obtained.

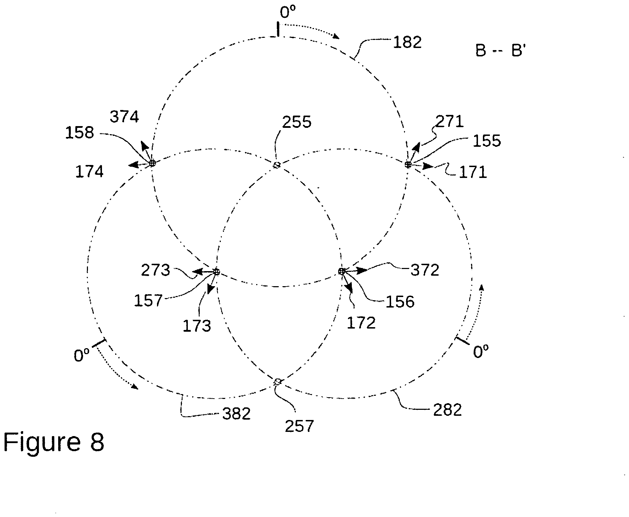

In reference to figure 8, at an altitude above those of the main cross-over point 402 (see figure 7), only secondary cross-over points are generated. The cross-sections 182, 282, and 382 formed by the intersection of sweep-out cones 180, 280 and 380 (see figure 6), respectively, with plane B-B' are depicted in figure 8. Points 155 and 157 are a secondary synchronous cross-over point involving beam 150 and beam 250 (see figure 6), while points 156 and 158 are secondary synchronous cross-over points involving beam 150 and beam 350 (see figure 6). The line-of-sight projection 171 and 271 are associated with the secondary synchronous cross-over point 155, the line-of-sight projection 173 and 273 are associated with the secondary synchronous cross-over point 157, the line-of-sight projection 172 and 372 are associated with the secondary synchronous cross-over point 156, and the line-of-sight projection 174 and 374 are associated with the secondary synchronous cross-over point 158. In combination, these four secondary synchronous cross-over points provide an accurate measurement of in-plane (i.e. B-B') air velocity measurement, both in time and in space. Thus, in addition to time-averaged air velocity values of interest for trend analysis, the invention can provide time and space resolved measurements for determination of atmospheric turbulence characteristics.

Points 255 and 257 are secondary cross-over points, of non-synchronous type, involving beams 250 and 350.

In general, in the preferred embodiment, we see that
- Horizontal plane A-A' contains one main cross-over point, two secondary synchronous cross-over points, and numerous regular measuring locations,
- Horizontal plane B-B', at a predetermined height above plane A-A', contains six secondary cross-over points, of which four are of synchronous type in the preferred embodiment, and numerous regular measuring locations.

In the event of malfunction of one of the remote-sensing units, the main cross-over point is lost, as well as one or two secondary cross-over points. If the remote-sensing unit failing is one other than beam 150 (see figure 6), operation can continue with remote-sensing parameters unchanged, using the remaining secondary cross-over points to provide accurate air-velocity measurements. In case remote-sensing unit 100 (see figure 1) is inoperative, secondary cross-over points 254 (in plane A-A' in figure 7), and 255, and 257 (in plane B-B' in figure 8) can be promoted to synchronous status by reversing the rotational direction of either one of the remaining beams.

Each remote-sensing unit measures the velocity of the air stream relative to the beam's velocity. When the buoy undergoes motion, such as pitching, yawing, tilting, or bobbing, the velocity of the remote-sensing beam relative to the air-stream will be altered. A motion-compensation unit inside cabinet 22 (see figure 3) uses the signals from a motion-detection unit, inside cabinet 22, to compensate the Doppler values (or, equivalently, line-of-sight velocity) reported by each of the remote-sensing units, for the buoy motion.

In a first embodiment, the motion compensation unit calculates the motion, comprising translative and rotational velocities, of each of the remote-sensing units by combining the signals from the motion-detection unit with the geometry of the buoy, assuming the buoy undergoes rigid-body motion. Mostly preferably, the motion-compensation unit receives the signals from a motion detection unit inside cabinet 22, and additionally receives a first local motion signal from a first local motion-detection unit inside the first remote-sensing unit 100 (see figure1), a second local motion signal from a second local motion-detection unit inside the second remote-sensing unit 200 (see figure1), and a third local motion signal from a third local motion-detection unit inside the third remote-sensing unit 300 (see figure1), and combines these signals to provide a more accurate compensation of the Doppler signals by taking into account both the motion of the upper flotation tank 20 (figure 3) as well as the relative motion of each remote-sensing unit 100, 200 and 300 with respect to the upper flotation tank 20. This relative motion is due to the structural flexibility of the buoy, and in particular, of the side-arms.

## Claims

**1.** A floating wind-measuring system comprising a buoy (10) having a first remote-sensing unit (100) emitting a first beam of waves (150) along a first beam direction into the atmosphere and measuring the air velocity along said first beam direction at a first sensing location (153), **characterized in**:
- a second remote-sensing unit (200) emitting a second beam of waves (250) along a second beam direction into the atmosphere and measuring the air velocity along said second beam direction at a second sensing location (253),
- a first side arm (110) attached to the buoy (10) and fixedly holding the first remote sensing unit (100) relative to the buoy (10),
- a second side arm (210) attached to the buoy (10) and fixedly holding the second remote sensing unit (200) relative to the buoy (10), the first and second arms (110, 210) providing a predetermined separation distance between the first remote-sensing unit (100) and the second remote-sensing unit (200),
wherein the first beam of waves (150) and the second beam of waves (250) are oriented to produce a cross-over point (402), the first and second sensing locations (153, 253) being located substantially in the vicinity of the cross-over point (402) and the predetermined separation distance being chosen to provide sufficient vectorial independence between the first beam direction (160) and the second beam direction (260) to allow the calculation of two components of the air velocity vector essentially at the cross-over point (402).

**2.** The system of claim 1, **characterized in that** the buoy (10) comprises a third remote-sensing unit (300) fixedly attached to the buoy (10) with a third side arm (310).

**3.** The system of claim 2 **characterized in that** the third remote-sensing unit (300) emits a third beam of waves (350) along a third beam direction (360) that is vectorially independent from the first beam direction (160) and the second beam direction (260), wherein the third remote-sensing unit (300) measures the air velocity along said third beam direction (360) at a third sensing location (353), said third beam of waves (350) is oriented to pass through the cross-over point (402), and the third sensing location (353) is essentially at the cross-over point (402), thereby making the cross-over point (402) a main cross-over point involving the first, second and third beams of waves (150, 250, 350).

**4.** The system as claimed in Claim 1, **characterized in that** the system comprises a first beam rotational means within the first remote-sensing unit (100) to rotate the first beam of waves (150) to sweep-out a first cone shape (180), a second beam rotational means within the second remote-sensing unit (200) to rotate the second beam of waves (250) to sweep-out a second cone shape (280), the first and second beam rotational means rotating at the same velocity, and synchronized to make the first beam of waves (150) and the second beam of waves (250) meet at the cross-over point (402) at essentially the same time.

**5.** The system in Claim 4, characterized that the rotational direction of the first beam rotational means is opposite to the rotational direction of the second beam rotational means.

**6.** The system as claimed in Claim 3 , further comprising a first beam rotational means within the first remote-sensing unit (100) to rotate the first beam of waves to sweep-out a first cone shape (180), a second beam rotational means within the second remote-sensing unit to rotate the second beam of waves (250) to sweep-out a second cone shape (280), a third beam rotational means within the third remote-sensing unit (300) to rotate the third beam of waves (350) to sweep-out a third cone shape (380), the first, second, and third beam rotational means rotating at the same velocity, the first rotational means rotating in a first rotational direction, the second and third rotational means rotating in opposite direction to the first rotational direction, the first, second and third rotational means being synchronized to make the first, second and third beam of waves (150, 250, 350) meet at the main cross-over point (402) at essentially the same time.

**6.** The system of Claim 1, **characterized in that** the buoy (10) comprises a local wind measuring instrument (400) fixedly attached to the buoy and positioned in the vicinity of the cross-over point (402).

**7.** The system of any of the preceding Claims, **characterized in that** the buoy (10) has a buoy motion-detection unit producing buoy motion signals indicative of the pitch, yaw, roll, and translative motion of the buoy (10), and a motion-compensation unit receiving said buoy (10) motions signals and compensating the calculation of air velocity for the motion of the buoy (10).

**8.** The system as claimed in claim 7, **characterized in that** the buoy motion-detection unit comprises a first local motion-detection unit located at the first remote-sensing unit (100) and a second local motion-detection unit located at the second remote sensing unit (200), the first local motion-detection unit producing a first local motion signal indicative of motion of the first remote-sensing unit (100), and the second local motion-detection means producing a second local motion signal indicative of the motion of the second remote-sensing unit (200).

**9.** The system of Claim 8, **characterized in that** a motion-compensation unit receives the first and second local motion signals and combines the first and second local motion signals with the buoy motion signals and compensates the calculation of air velocity for the motion of the buoy (10) and for the motion of each local motion-detecting unit relative to the buoy motion-detection unit.

**10.** The system of Claim 1, **characterized in that** the buoy (10) comprises a first flotation tank (28), a second flotation tank (42) at a predetermined separation distance to the first flotation tank (18), and a pipe-stem connecting the first and second flotation tanks (28, 42), the pipe-stem resting in essentially a horizontal position on the water surface (1) when the first and second flotation tanks (28, 42) are fully buoyant, the pipe-stem resting in an essentially vertical position when the buoyancy of the second flotation tank (42) is reduced by a predetermined amount.

**11.** A method for correcting remote-sensing data obtained using the floating wind-measuring system of Claim 6, **characterized in**:
- computing the wind field velocity from the remote-sensing data at the cross over point,
- measuring the wind velocity using the local wind measuring instrument,
- comparing the measured and computed wind field velocities, and
- modifying the computation of the remote-sensing data to bring the computed and measured values in agreement.
